# FASCICULE DE BREVET EUROPEEN

(11) **EP 0 657 699 B1**
(45) Date de publication et mention de la délivrance du brevet: **02.05.1997**
(21) Numéro de dépôt: 94402531.1
(22) Date de dépôt: 09.11.1994
(51) Int. Cl.: F23R 3/34, F23R 3/12

(54) **Chambre de combustion pour turbomachine munie d'un séparateur des gaz**
Gasturbinenbrennkammer mit einem zentralen Schneidering
Gasturbine combustor with a center body separating the gas flux

(30) Priorité: 10.11.1993 FR 9313408
(43) Date de publication de la demande: 14.06.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Alary, Jean-Paul Daniel, F-94100 St Maur des Fosses (FR); Desaulty, Michel André Albert, F-77240 Vert Saint Denis (FR); Jamet, Joé Louis, F-77780 Bourron Marlotte (FR); Sandelis, Denis Jean Maurice, F-77370 Nangis (FR); Schroer, Pierre Marie Victor, F-91800 Brunoy (FR)

(56) Documents cités:
- EP-A- 0 509 176
- GB-A- 2 269 449
- US-A- 4 058 977
- US-A- 4 903 492

## Description

La conception des nouvelles turbomachines aéronautiques conduit, pour obtenir des taux de pollution réduits, à envisager l'adoption de chambres de combustion annulaires à deux groupes de têtes d'injection, l'un fonctionnant au régime ralenti, les deux au régime plein gaz.

Les têtes d'injection des deux groupes sont contenues dans deux zones distinctes du fond de la chambre de combustion disposées de part et d'autre d'un séparateur de gaz constitué par une virole interne.

Quelques inconvénients ont été constatés lors de l'utilisation de cette disposition:
- lorsque les têtes "ralenti" sont seules à fonctionner, les températures en sortie de chambre de combustion varient de 900°K à 1800°K entre la partie interne et la partie externe de la section de sortie de chambre, ou encore entre le pied et la tête de l'aubage directeur placé à cette sortie; cette variation de température provoque des pertes de rendement de la turbine à gaz;
- lorsque les deux groupes de têtes fonctionnent, le séparateur crée un sillage de nature principalement bidimensionnelle se développant dans la direction de l'écoulement des gaz; ce sillage est également préjudiciable aux températures de sorties de chambre.

L'invention entend remédier à ces inconvénients et propose pour ce faire l'adoption d'un séparateur conforme à un nouveau dessin.

L'invention est donc relative à une chambre de combustion, p. ex. selon le document EP-A-509 176, possédant: une structure d'une paroi externe et d'une paroi interne, chacune de forme annulaire ayant un axe de sensible symétrie commun à ces parois externe et interne, et d'un fond réunissant lesdites parois externe et interne, l'ensemble des parois externe et interne et du fond délimitant une enceinte de combustion; des injecteurs de carburant répartis en deux groupes d'injecteurs de carburant externes et internes, destinés de préférence, les injecteurs de carburant externes à réaliser une alimentation en carburant lors d'un premier mode de fonctionnement, et, les injecteurs de carburant internes à réaliser une alimentation en carburant lors d'un deuxième mode de fonctionnement; et, un ensemble séparateur des gaz, qui comporte une face axiale externe et une face axiale interne mutuellement espacées, chacune ayant une forme générale sensiblement symétrique par rapport audit axe commun de symétrie, une section transversale sensiblement circulaire, une extrémité amont et une extrémité aval, ledit ensemble séparateur des gaz comportant également une face transversale d'extrémité aval reliant les extrémités aval des faces axiales externe et interne, cet ensemble séparateur des gaz étant interposé entre les injecteurs de carburant externes et les injecteurs de carburant internes et étant fixé sur ladite structure.

Selon l'invention, des rainures axiales sont ménagées dans chacune des faces axiales externe et interne, s'étendent entre, d'une part, une ligne intermédiaire entre lesdites extrémités amont et aval de ladite face axiale, d'autre part, l'extrémité aval de ladite face axiale, et débouchent dans cette face axiale et dans ladite face transversale d'extrémité aval.

Les avantageuses dispositions suivantes sont en outre de préférence adoptées:
- la profondeur d'une rainure croît le long de ladite rainure depuis ladite ligne intermédiaire jusqu'à ladite extrémité aval de la face axiale;
- la largeur d'une rainure croit le long de ladite rainure depuis ladite ligne intermédiaire jusqu'à ladite extrémité aval de la face axiale;
- ledit ensemble séparateur des gaz des gaz comprend une paroi externe, une paroi interne et une paroi d'extrémité aval, qui, ensemble, délimitent un corps creux, cependant que lesdites rainures sont obtenues par emboutissage desdites parois externe et interne;
- les rainures ménagées dans lesdites faces axiales externe et interne sont contenues, par paire, dans des plans radiaux communs, une rainure d'une paire étant ménagée dans la face axiale externe et l'autre rainure de ladite paroi étant ménagée dans la face axiale interne;
- les rainures ménagées dans ladite face axiale externe sont contenues dans des plans radiaux qui sont intercalés entre des plans radiaux contenant les rainures ménagées dans la face axiale interne;
- l'ensemble séparateur des gaz est monobloc de forme annulaire.

Le nouveau séparateur qui vient d'être défini permet de générer des tourbillons d'axes essentiellement parallèles à la direction principale d'écoulement des gaz.

Dans les deux cas de fonctionnement précédemment envisagés, ces tourbillons empêchent une dégradation de la carte des températures, et accroissent en outre la capacité de propagation de la flamme, utile notamment lors du passage du fonctionnement au ralenti à celui de "pleins gaz".

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:
- la figure 1 est une coupe axiale d'une chambre de combustion conforme à l'invention;
- la figure 2 est une vue suivant coupe II-II de la figure 3, du séparateur de la chambre de combustion représentée sur la figure 1;
- les figures 3 et 4 sont des coupes, respectivement suivant III-III et IV-IV de la figure 2;
- la figure 5 est une coupe, analogue à celle de la figure 2, d'une variante de réalisation d'un séparateur conforme à l'invention, suivant V-V de la figure 6;
- les figures 6 et 7 sont des coupes, respectivement suivant VI-VI et VII-VII de la figure 5; et,

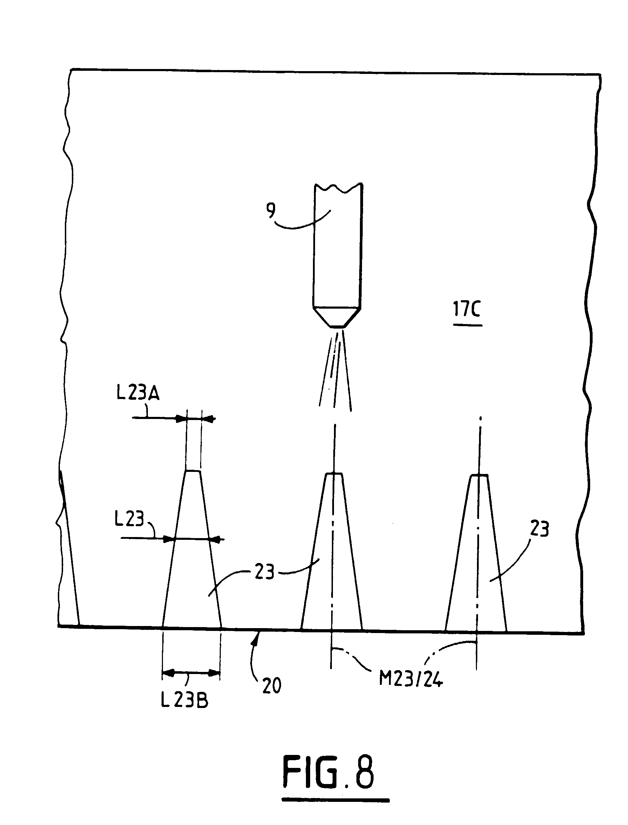

- la figure 8 est une vue suivant la flèche F de la figure 2.

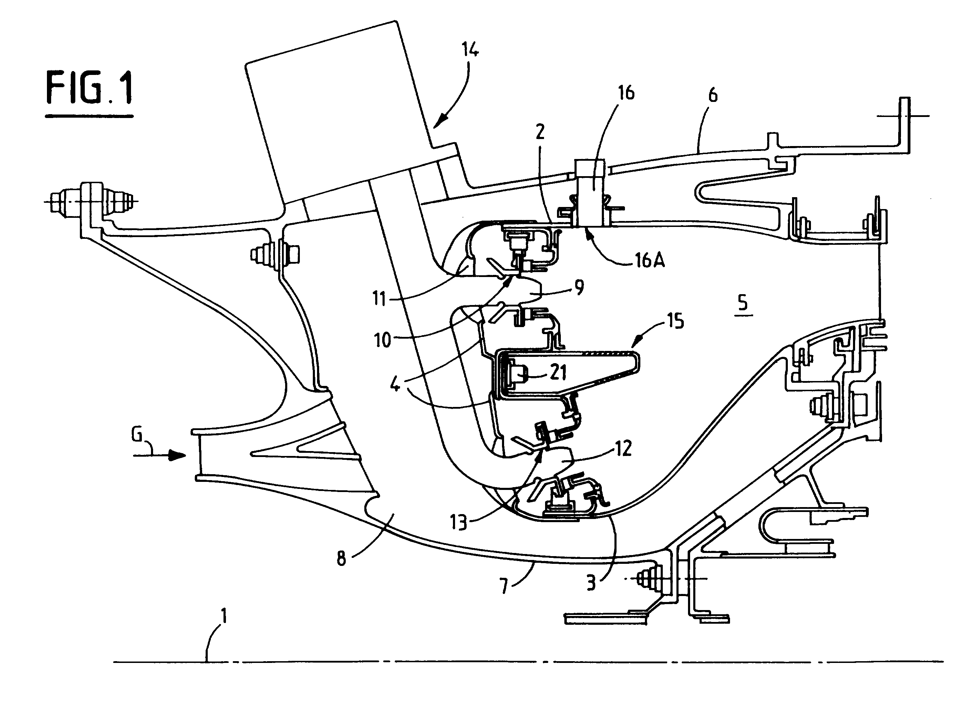

La chambre de combustion de turbine à gaz représentée sur la figure 1 comprend:
- un axe 1 de sensible symétrie axiale;
- une paroi annulaire externe 2, symétrique de révolution d'axe 1;
- une paroi annulaire interne 3, symétrique de révolution d'axe 1;
- un fond 4, transversal par rapport à l'axe 1, réunissant les parois externe 2 et interne 3, et délimitant avec celles-ci une enceinte de combustion 5;
- des deuxièmes parois annulaires externe 6 et interne 7, de révolution d'axe 1, définissant une enceinte 8, alimentée en air sous pression provenant d'un compresseur d'air (flèche G) et contenant ladite enceinte de combustion 5;
- une première couronne circulaire d'axe 1, sur laquelle sont centrés des injecteurs de carburant 9 d'un premier groupe d'injecteurs de carburant, chacun d'eux traversant un trou 10 ménagé dans le fond 4 et coopérant pour la carburation du carburant avec des passages d'air, plus généralement de comburant 11 qui traversent le fond 4, ces injecteurs de carburant, les plus proches de la paroi externe 2, étant destinés à fonctionner, en étant seuls en service, au régime du ralenti;
- une deuxième couronne circulaire d'axe 1, de diamètre inférieur à celui de la première couronne, sur laquelle sont centrés des injecteurs de carburant 12 d'un deuxième groupe d'injecteurs de carburant, chacun d'eux traversant un trou 13 ménagé dans le fond 4, ces injecteurs de carburant étant destinés à fonctionner au régime de pleins gaz, ou de décollage d'un avion équipé de ladite turbine à gaz, les injecteurs de carburant 9 et 12 étant branchés sur un dispositif général 14 d'alimentation en carburant;
- un ensemble 15 séparateur de gaz, de forme générale annulaire d'axe 1, fixé sur le fond 4, interposé entre les injecteurs de carburant 9 et 12 des deux groupes, constituant une saillie à l'intérieur de l'enceinte de combustion 5 par rapport au fond 4;
- des bougies d'allumage 16, qui sont portées par la paroi externe 2 et dont les têtes 16A sont disposées à l'intérieur de l'enceinte de combustion 5.

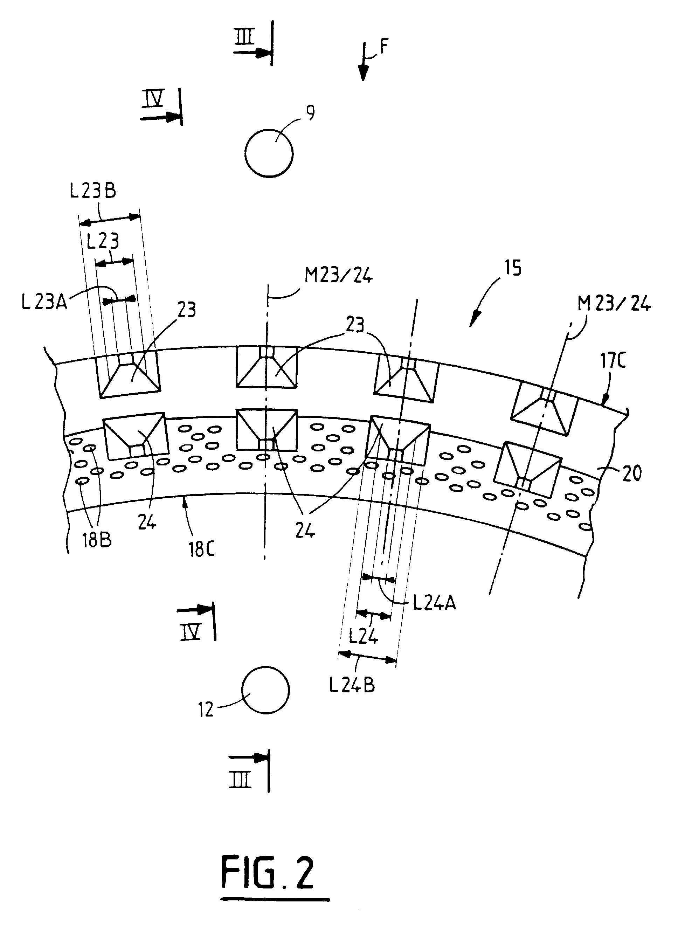

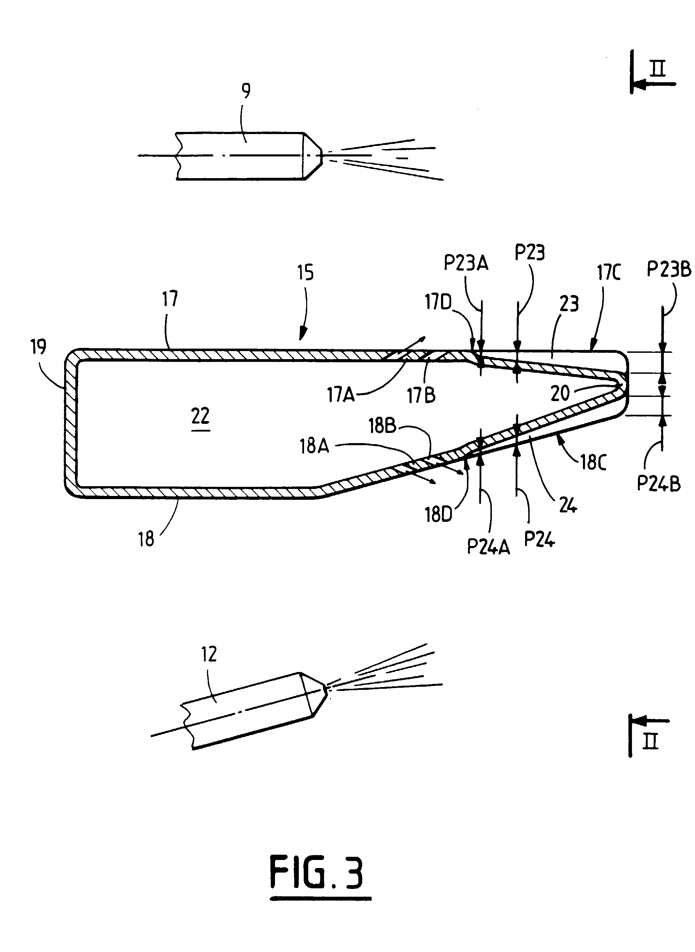

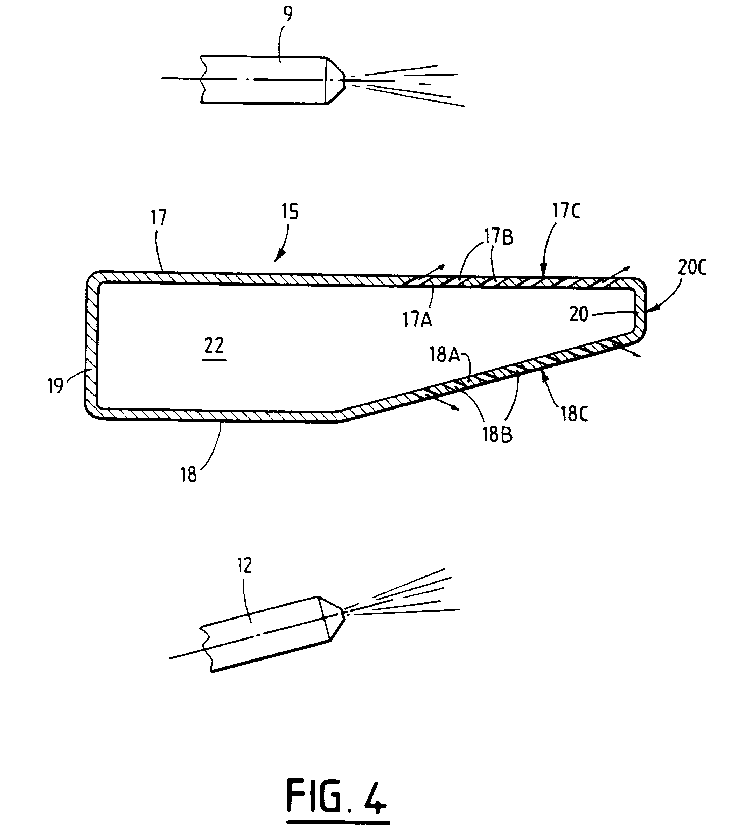

Les figures 2 à 4 représentent une première réalisation de l'ensemble séparateur des gaz 15.

Celui-ci comprend une enceinte annulaire 22 délimitée par une virole annulaire externe 17, de révolution d'axe 1; une virole annulaire interne 18 de révolution d'axe 1; un fond transversal amont 19, qui relie les viroles externe 17 et interne 18; et, une paroi transversale aval 20, sensiblement perpendiculaire à l'axe 1, et reliant également les extrémités aval des viroles externe 17 et interne 18. Cette enceinte annulaire est fixée sur le fond 4 de la chambre de combustion par des boulons 21 et reçoit en outre du comburant comprimé provenant de l'enceinte 8 par des orifices, dont est muni leur fond 19.

Les parties aval 17A et 18A des viroles externe 17 et interne 18, qui s'étendent généralement sur une profondeur comprise entre 0,3 et 0,5 des profondeurs respectives desdites viroles jusqu'à leurs extrémités aval, sont perforées par des pluralités de trous 17B, 18B, formant des multiperforations à la fois d'admission de comburant dans la chambre de combustion 5 et de réfrigération de cette partie de l'ensemble séparateur des gaz.

De plus, dans les faces externes 17C, 18C des parties aval des viroles 17, 18, sont ménagées à partir de lignes 17D, 18D intermédiaires entre les extrémités amont et aval des viroles 17, 18, de petites rainures longitudinales 23, 24, respectivement, régulièrement espacées à la surface de chaque virole, contenues, chacune, dans un plan radial passant par l'axe 1. Chaque rainure 23, 24 débouche à la fois dans la face 17C, 18C correspondante, et, dans la face externe 20C de la paroi transversale d'extrémité aval 20, et est de préférence obtenue par emboutissage de la virole 17, 18.

Il y a enfin lieu de noter les particularités suivantes:
- la profondeur P23A de la rainure 23, à la naissance amont de cette rainure, est inférieure à la profondeur P23B à l'extrémité aval de la rainure, la profondeur P23 croissant de P23A à P23B;
- de manière analogue la profondeur P24 de la rainure 24 croit entre la valeur P24A amont et la valeur P24B aval;
- de même, les largeurs L23, L24 des rainures 23, 24 croissent entre des valeurs minimales L23A, L24A, à la naissance amont desdites rainures et des valeurs maximales L23B, L24B au débouché aval de ces rainures dans la paroi transversale d'extrémité 20, respectivement;
- enfin, dans la réalisation représentée sur les figures 2 à 4, les rainures 23 et 24 ont des plans médians M23/24, chacun commun à une rainure 23 et à une rainure 24, qui, en fait, sont des plans radiaux contenant l'axe 1.

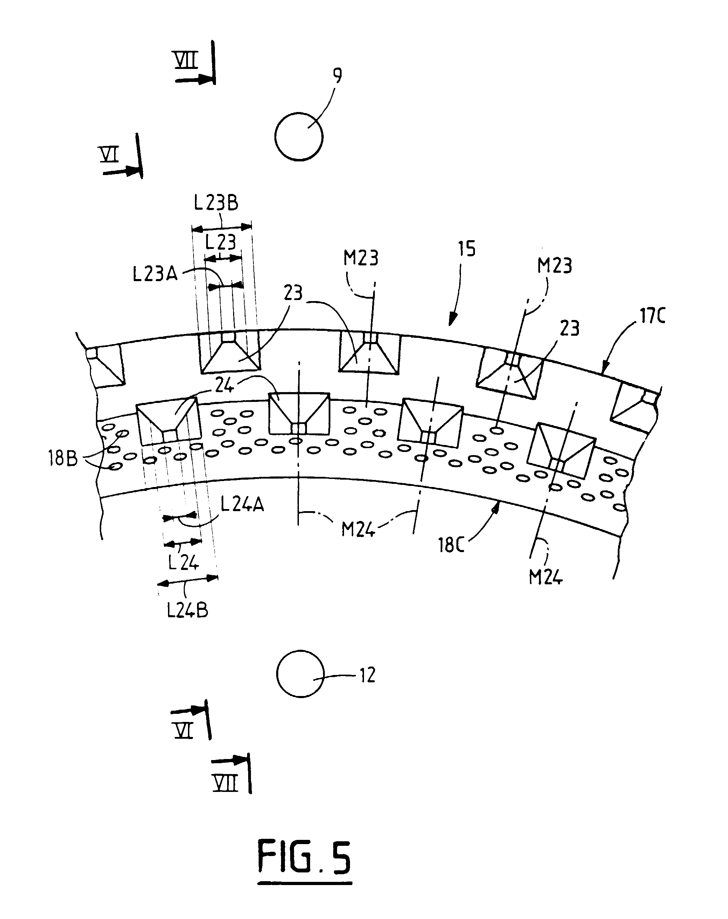

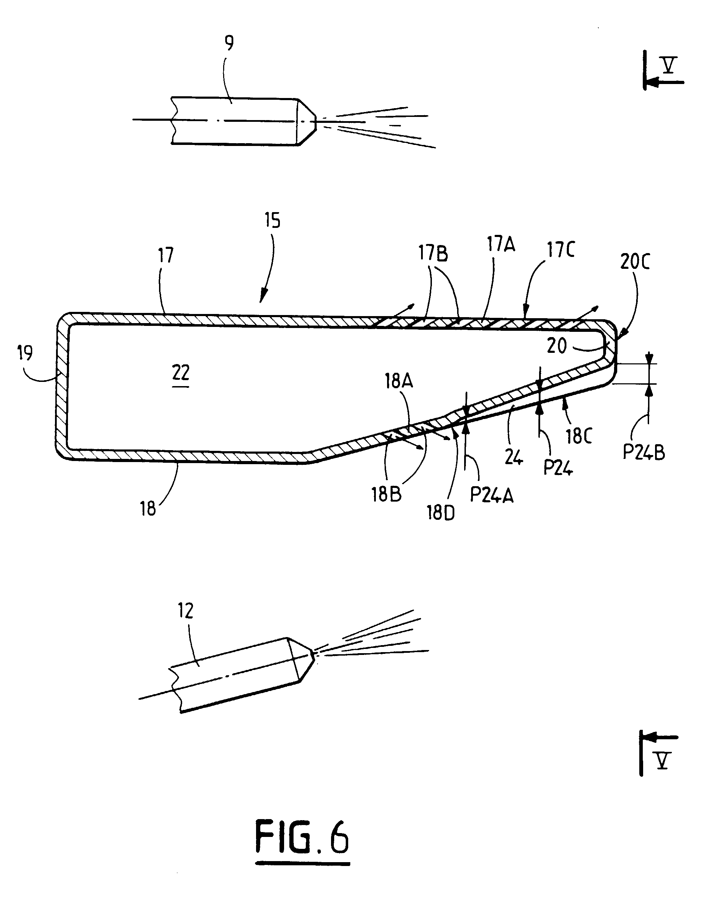

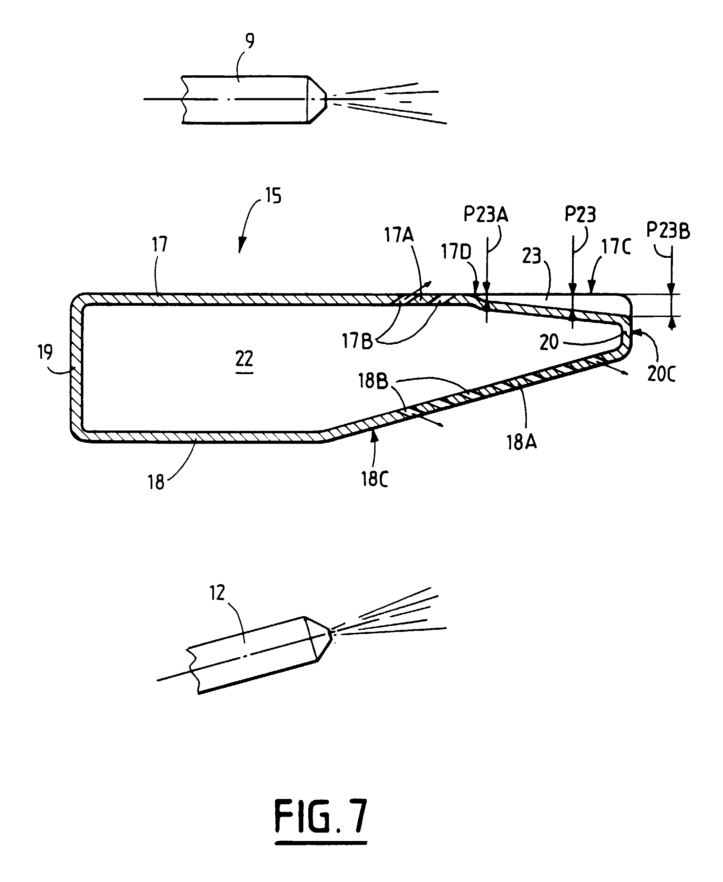

La réalisation des figures 5 à 7 possède une constitution identique à celle des figures 2 à 4, sauf la caractéristique suivante: les plans médians M23, M24 des rainures 23, 24, qui sont encore des plans radiaux contenant l'axe 1, sont distincts les uns des autres, chaque plan M23 étant situé entre deux plans M24, et, complémentairement, chaque plan M24 étant situé entre deux plans M23. Les dispositions communes aux deux réalisations sont bien entendu repérées par les mêmes références.

Le principal avantage de fonctionnement des ensembles décrits réside dans la création, par les rainures 23 et 24 de tourbillons au sein de l'écoulement des gaz, qui améliorent le brassage des gaz et ainsi, notamment, favorise une bonne propagation de la flamme. Le résultat global est une amélioration de la combustion et du rendement, ainsi qu'une meilleure répartition des températures à l'extrémité aval de la chambre de combustion 5.

Les formes progressives préférées des rainures 23, 24 sont particulièrement aptes à obtenir l'optimisation du fonctionnement qui vient d'être décrit.

L'invention n'est pas limitée aux réalisations décrites, mais en couvre au contraire toutes les variantes qui pourraient leur être apportées sans sortir de leur cadre.

## Revendications

1. Chambre de combustion possédant:
une structure d'une paroi externe (2) et d'une paroi interne (3), chacune de forme annulaire ayant un axe de sensible symétrie (1) commun à ces parois externe et interne, et d'un fond (4) réunissant desdits parois externe et interne, l'ensemble des parois externe et interne et du fond délimitant une enceinte de combustion (5);
des injecteurs de carburant répartis en deux groupes distincts d'injecteurs de carburant externes (9) et internes (12), destinés de préférence les injecteurs de carburant externes (9) à réaliser une alimentation en carburant lors d'un premier mode de fonctionnement, et, les injecteurs de carburant internes (12) à réaliser une alimentation en carburant lors d'un deuxième mode de fonctionnement; et,
un ensemble séparateur des gaz (15), qui comporte une face axiale externe (17C) et une face axiale interne (18C) mutuellement espacées, chacune ayant une forme générale sensiblement symétrique par rapport audit axe commun de symétrie (1), une section transversale sensiblement circulaire, une extrémité amont (19) et une extrémité aval (20), ledit ensemble séparateur des gaz comportant également une face transversale (20C) d'extrémité aval reliant les extrémités aval des faces axiales externe (17C) et interne (18C), cet ensemble séparateur des gaz étant interposé entre les injecteurs de carburant externes (9) et les injecteurs de carburant internes (12) et étant fixé (21) sur ladite structure;
caractérisée en ce que des rainures axiales (23, 24) sont ménagées dans chacune des faces axiales externe et interne, s'étendent entre, d'une part, une ligne intermédiaire entre lesdites extrémités amont (19) et aval (20) de ladite face axiale, d'autre part, l'extrémité aval (20) de ladite face axiale, et débouchent dans cette face axiale (17C, 18C) et dans ladite face transversale (20) d'extrémité aval.

2. Chambre de combustion selon la revendication 1,
caractérisée en ce que la profondeur (P23, P24) d'une rainure (23, 24) croit le long de ladite rainure depuis ladite ligne intermédiaire (17D, 18D) jusqu'à ladite extrémité aval (20) de la face axiale.

3. Chambre de combustion selon l'une quelconque des revendications 1 et 2,
caractérisée en ce que la largeur (L23, L24) d'une rainure (23, 24) croit le long de ladite rainure depuis ladite ligne intermédiaire (17D, 18D) jusqu'à ladite extrémité aval (20) de la face axiale.

4. Chambre de combustion selon l'une quelconque des revendications 1 à 3,
caractérisée en ce que ledit ensemble séparateur des gaz comprend une paroi externe (17), une paroi interne (18) et une paroi d'extrémité aval (20), qui, ensemble, délimitent un corps creux (22), cependant que lesdites rainures (23, 24) sont obtenues par emboutissage desdites parois externe et interne.

5. Chambre de combustion selon l'une quelconque des revendications 1 à 4,
caractérisée en ce que les rainures (23, 24) ménagées dans lesdites faces axiales externe (17C) et interne (18C) sont contenues, par paire, dans des plans radiaux communs (M23/24), une rainure (23) d'une paire étant ménagée dans la face axiale externe (17C) et l'autre rainure (24) de ladite paire étant ménagée dans la face axiale interne (18C).

6. Chambre de combustion selon l'une quelconque des revendications 1 à 4,
caractérisée en ce que les rainures (23), ménagées dans ladite face axiale externe (17C) sont contenues dans des plans radiaux (M23) qui sont intercalés entre des plans radiaux (M24) contenant les rainures (24) ménagées dans la face axiale externe (18C).

7. Chambre de combustion selon l'une quelconque des revendications 1 à 6,
caractérisée en ce que l'ensemble séparateur des gaz (15) est monobloc de forme annulaire.

## Patentansprüche

1. Brennkammer
mit einer Struktur, die aus einer Außenwand (2) und einer Innenwand (3) von jeweils ringförmiger Gestalt mit einer der Außen- und Innenwand gemeinsamen Symmetrieachse (1) und aus einem die Außen- und Innenwand miteinander verbindenden Boden (4) besteht, wobei die Außen- und Innenwand und der Boden zusammen einen Brennraum (5) begrenzen,
mit Kraftstoffeinspritzdüsen, die in zwei getrennte Gruppen von äußeren und inneren Kraftstoffeinspritzdüsen (9 bzw. 12) unterteilt sind, wobei die äußeren Kraftstoffeinspritzdüse (9) vorzugsweise für die Kraftstoffeinspritzung während eines ersten Betriebszustands und die inneren Kraftstoffeinspritzdüse (12) vorzugsweise für die Kraftstoffeinspritzung während eines zweiten Betriebszustands bestimmt ist,
sowie mit einer Gastrenneinheit (15) mit einer axialen Außenfläche (17C) und einer axialen Innenfläche (18C), die in gegenseitigem Abstand angeordnet sind und jeweils eine relativ zu der gemeinsamen Symmetrieachse (1) im wesentlichen symmetrische generelle Form, einen im wesentlichen kreisförmigen Querschnitt, einen stromaufwärtigen Endbereich (19) und einen stromabwärtigen Endbereich (20) haben, wobei die Gastrenneinheit außerdem eine stromabwärtige transversale Stirnfläche (20C) besitzt, die die stromabwärtigen Endbereiche der axialen Außen- und Innenfläche (17C bzw. 18C) miteinander verbindet und wobei die Gastrenneinheit zwischen den äußeren Kraftstoffeinspritzdüsen (9) und den inneren Kraftstoffeinspritzdüse (12) angeordnet und an der genannten Struktur befestigt ist (21),
**dadurch gekennzeichnet**,
daß sowohl in der axialen Außenfläche als auch in der axialen Innenfläche jeweils axiale Nuten (23, 24) angebracht sind, die zwischen einer Zwischenlinie zwischen den stromaufwärtigen (19) und stromabwärtigen (20) Endbereichen der betreffenden axialen Fläche einerseits und dem stromabwärtigen Endbereich (20) der genannten axialen Fläche andererseits verlaufen und in dieser axialen Fläche (17C, 18C) und in der stromabwärtigen transversalen Stirnfläche (20C) münden.

2. Brennkammer nach Anspruch 1,
**dadurch gekennzeichnet**,
daß die Tiefe (P23, P24) einer Nut (23, 24) entlang der Nut von der Zwischenlinie (17D, 18D) aus bis zu dem stromabwärtigen Endbereich (20) der axialen Fläche anwächst.

3. Brennkammer nach einem der Ansprüche 1 und 2,
**dadurch gekennzeichnet**,
daß die Breite (L23, L24) einer Nut (23, 24) entlang der Nut von der Zwischenlinie (17D, 18D) aus bis zu dem stromabwärtigen Endbereich (20) der axialen Fläche anwächst.

4. Brennkammer nach einem der Ansprüche 1 bis 3,
**dadurch gekennzeichnet**,
daß die Gastrenneinheit eine Außenwand (17), eine Innenwand (18) und eine stromabwärtige Stirnwand (20) besitzt, die zusammen einen Hohlkörper (22) begrenzen,
und daß die genannten Nuten (23, 24) durch Tiefziehen der Innen- und Außenwand hergestellt sind.

5. Brennkammer nach einem der Ansprüche 1 bis 4,
**dadurch gekennzeichnet**,
daß die in der axialen Außen- und Innenfläche (17C bzw. 18C) angebrachten Nuten (23, 24) paarweise in gemeinsamen radialen Ebenen (M23/24) enthalten sind, wobei eine Nut (23) eines Paares in der axialen Außenfläche (17C), und die andere Nut (24) des genannten Paares in der axialen Innenfläche (18C) angebracht sind.

6. Brennkammer nach einem der Ansprüche 1 bis 4,
**dadurch gekennzeichnet**,
daß die in der axialen Außenfläche (17C) angebrachten Nuten (23) in radialen Ebenen (M23) enthalten sind, die zwischen den radialen Ebenen (M24) verschachtelt angeordnet sind, die die in der axialen Innenfläche (18C) angebrachten Nuten (24) enthalten.

7. Brennkammer nach einem der Ansprüche 1 bis 6,
**dadurch gekennzeichnet**,
daß die Gastrenneinheit (15) ein einziger ringförmiger Block ist.

## Claims

1. Combustion chamber assembly having:
a structure of an external wall (2) and of an internal wall (3), each of annular shape having an axis (1) of almost symmetry common to this external wall and to this internal wall, and of an end (4) joining together the said external wall and the said internal wall, the external wall, the internal wall and the end together delimiting a combustion chamber (5);
fuel injectors split into two distinct groups of external fuel injectors (9) and internal fuel injectors (12) which are intended, preferably the external fuel injectors (9) to supply fuel in a first operating mode and, the internal fuel injectors (12) to supply fuel during a second operating mode; and,
a gas flow separator assembly (15), which includes an external axial face (17C) and an internal axial face (18C) which are spaced apart, each face having an overall shape which is almost symmetrical with respect to the said common axis of symmetry (1), an almost circular transverse section, an upstream end (19) and a downstream end (20), the said gas flow separator assembly also including a downstream end transverse face (20C) connecting the downstream ends of the external axial face (17C) and internal axial face (18C), this gas flow separator assembly being interposed between the external fuel injectors (9) and the internal fuel injectors (12) and being fixed (21) to the said structure;
characterized in that axial grooves (23, 24) are formed in each of the, external and internal, axial faces and extend between, on the one hand, an intermediate line between the said upstream end (19) and downstream end (20) of the said axial face and, on the other hand, the downstream end (20) of the said axial face, and open into this axial face (17C, 18C) and into the said downstream end transverse face (20).

2. Combustion chamber assembly according to Claim 1,
characterized in that the depth (P23, P24) of a groove (23, 24) increases along the length of the said groove from the said intermediate line (17D, 18D) as far as the said downstream end (20) of the axial face.

3. Combustion chamber assembly according to either of Claims 1 and 2,
characterized in that the width (L23, L24) of a groove (23, 24) increases along the length of the said groove from the said intermediate line (17D, 18D) as far as the said downstream end (20) of the axial face.

4. Combustion chamber assembly according to any one of Claims 1 to 3,
characterized in that the said gas flow separator assembly comprises an external wall (17), an internal wall (18) and a downstream end wall (20) which together delimit a hollow body (22), while the said grooves (23, 24) are obtained by stamping the said external wall and internal wall.

5. Combustion chamber assembly according to any one of Claims 1 to 4,
characterized in that the grooves (23, 24) made in the said external axial face (17C) and internal axial face (18C) are contained, in pairs, in common radial planes (M23/24), one groove (23) of a pair being formed in the external axial face (17C) and the other groove (24) of the said pair being formed in the internal axial face (18C).

6. Combustion chamber assembly according to any one of Claims 1 to 4,
characterized in that the grooves (23) formed in the said external axial face (17C) are contained in radial planes (M23) which are interposed between radial planes (M24) containing the grooves (24) formed in the external axial face (18C).

7. Combustion chamber assembly according to any one of Claims 1 to 6,
characterized in that the gas flow separator assembly (15) is monobloc and of annular shape.
